Europäisches Patentamt

European Patent Office

Office européen des brevets

(11) Publication number: **0 225 610**
**B1**

(12) **EUROPEAN PATENT SPECIFICATION**

(45) Date of publication of patent specification: **26.07.89**

(51) Int. Cl.⁴: **B 04 B 5/04, F 16 C 15/00**

(21) Application number: **86116880.5**

(22) Date of filing: **04.12.86**

(54) Composite ultracentrifuge rotor.

(30) Priority: **06.12.85 US 805708**

(43) Date of publication of application:
**16.06.87 Bulletin 87/25**

(45) Publication of the grant of the patent:
**26.07.89 Bulletin 89/30**

(84) Designated Contracting States:
**DE FR GB**

(56) References cited:
**FR-A-2 292 898**
**FR-A-2 360 008**
**FR-A-2 538 719**
**GB-A-2 097 297**
**US-A-4 198 878**

(73) Proprietor: **E.I. DU PONT DE NEMOURS AND COMPANY**
**1007 Market Street**
**Wilmington Delaware 19898 (US)**

(72) Inventor: **Breslich, Francis Nicholas, Jr.**
**2405 S. W. 125th Street**
**Seattle Washington 98146 (US)**
Inventor: **Laakso, John Heimo**
**402 S. W. 197th Street**
**Seattle Washington 98166 (US)**

(74) Representative: **von Kreisler, Alek, Dipl.-Chem. et al**
**Deichmannhaus am Hauptbahnhof**
**D-5000 Köln 1 (DE)**

Courier Press, Leamington Spa, England.

## Description

This invention relates to an ultracentrifuge rotor and, in particular, to an ultracentrifuge rotor fabricated of a composite material.

In order to increase centrifugal load carrying capability the manufacture of rotating structures has evolved from the use of homogeneous materials such as aluminium and titanium toward the use of composite materials. The use of such composite materials has become especially apparent in the area of flywheel storage structures. Exemplary of rotating energy storage structures using composites are US—A—4 481 840, US—A—4 408 500, US—A—4 370 899, US—A—4 266 442, US—A—4 207 778.

FR—A—2 538 719 describes a centrifuge rotor of the type as mentioned in the precharacterizing part of claim 1. The known centrifuge rotor has an inner body with cavities for nesting receptacles and an outer rim surrounding the inner body and being made of fiber reinforced carbon of high tensile modulus. The inner body and the outer rim are adjoined with each other simultaneously with the graphitisation of the carbon of the outer rim during fabrication of the composite rotor. In operation of the centrifuge rotor, there is a danger that ruptures will occur at the junction between the inner body and the outer ring because the receptacles tend to locally broaden the diameter of the outer rim.

GB—A—2 097 297 describes a centrifuge rotor wherein the rotor body is made of a continuous fibrous composite material composed of continuous high-tensile fibers such as of glass, graphite or boron impregnated with synthetic resin. The fibers extend around the buckets and around rotor shaft for providing a high-tensile connection between the buckets and the rotor shaft. The fiber material does not surround the structure of the rotor like a rim.

It is the object of the present invention to provide a centrifuge rotor of the type as defined in the precharacterizing part of claim 1 wherein the cavities may be placed closer to the rotor periphery, the rotor being able to withstand high centrifugal forces.

According to the invention, this problem is solved with the features of the characterizing part of claim 1.

The present invention relates to an ultracentrifuge rotor fabricated of a relatively thick central disc member formed of composite material. A plurality of sample receiving cavities is arranged in an annular array adjacent to the periphery of the central disc. A compressive rim formed of a hoop wound, carbon fiber-reinforced, plastic material having a higher stiffness than the central disc surrounds the periphery of the disc. Both the periphery of the disc and the inner diameter of the rim are fabricated with conforming slightly polygonal shapes. The rim and disc are assembled with adhesive bonds located therebetween only in the areas of the sample receiving cavities. When at speed, due to the disparity in stiffnesses, the rim will tend to deflect to generate inwardly directed radial force being applied to the disc in the area of each sample cavity. A drive fitting is adhesively bonded in any suitable manner to the underside of the disc whereby the rotor may be disposed in a driven relationship with a source of motive energy.

The invention may be more fully understood from the following detailed description thereof taken in connection with the accompanying drawings which form a part of this application and in which:

Figure 1 is a plan view of one embodiment of an ultracentrifuge rotor formed in accordance with the present invention with portions of the disc member broken away from clarity to illustrate the orientation of the fibers in each lamina;

Figure 2 is a typical side elevational view of the ultracentrifuge rotor shown in Figures 1 and 4;

Figure 3 is a highly stylized diagram of the forces acting on the disc member by the band with the rotor of Figure 1 at speed; and

Figures 4 and 5 are views respectively similar to Figures 1 and 3 illustrating an alternate embodiment of a rotor in accordance with the present invention.

Throughout the following detailed description similar reference numerals refer to similar elements in all figures of the drawings.

With reference to the figures shown is an ultracentrifuge rotor generally indicated by reference character 10 in accordance with the present invention. The rotor 10 is rotatable at speeds in excess of 20,000 revolutions per minute about a central axis of rotation VCL.

The rotor 10 includes a central disc 12 of substantially uniform height. The disc 12 is polygonal and not truly circular in perimetric configuration. An array of sample container receiving cavities 14 is arranged in any predetermined arrangement in the disc 12. The cavities 14 are arranged in a generally annular array adjacent to the periphery of the disc 12. The cavities 14 lie within a predetermined close dimension 16 to the periphery of the disc 12. The sample receiving cavities 14 are shown in the Figures as arranged with their axes 14A parallel to the central vertical axis VCL of the rotor 10 although the axes 14A may be inclined with respect to the axis VCL and remain within the contemplation of the present invention.

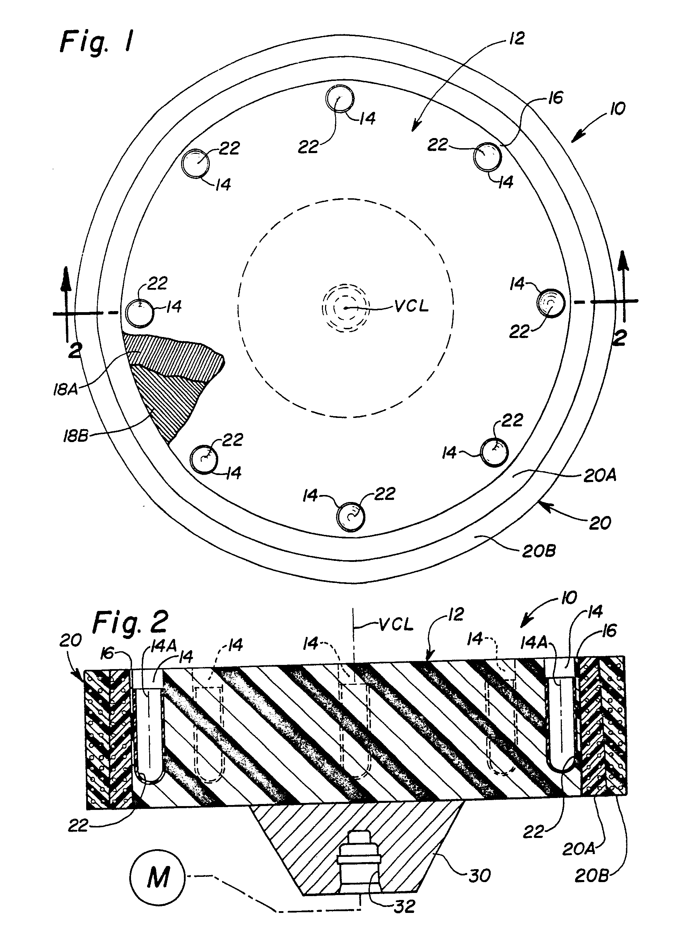

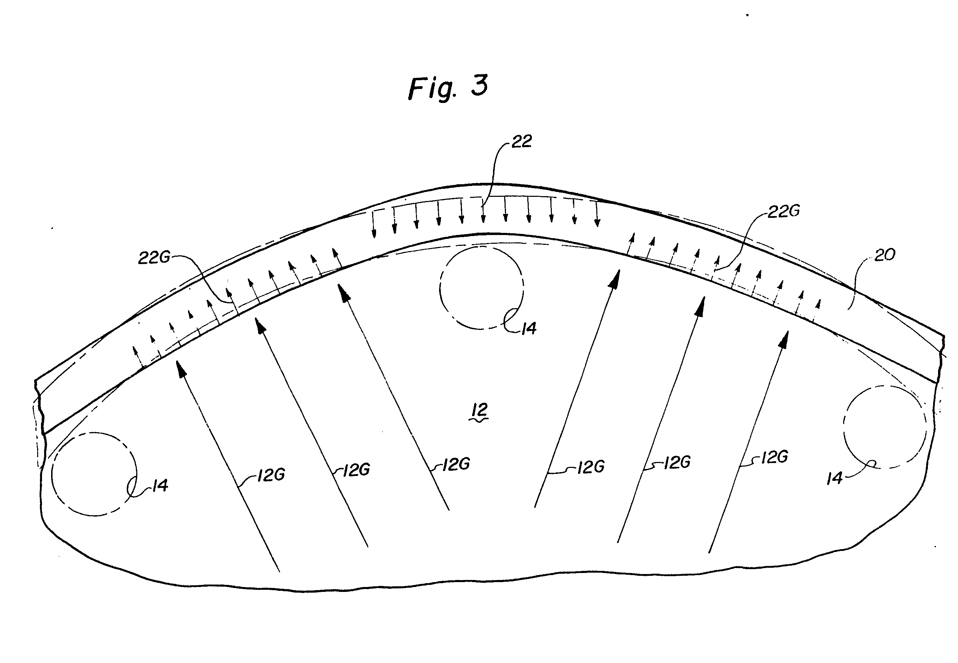

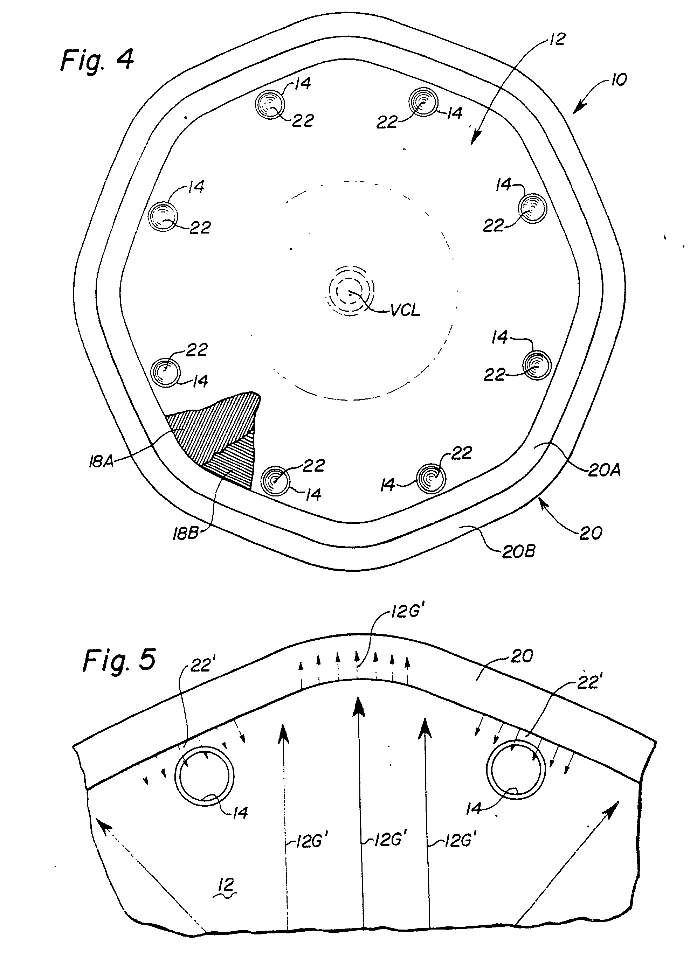

In one embodiment of the invention shown in Figures 1 and 3 the cavities 14 are formed in the disc 12 in the vicinity of the points of the polygon that defines the perimeter of the disc. In an alternate embodiment shown in Figures 4 and 5 the cavities 14 are arranged in the disc 12 substantially midway between the points of the polygon.

The disc 12, although shown in Figure 2 as an integrated structure for purposes of illustration, is formed, in fact, as a laminate of a plurality of laminae 18 of unidirectional preimpregnated composite fiber-resin material. The fibers in each lamina 18 are, as seen from the broken portion of Figures 1 and 4, formed with the axes of each of the fibers in a given layer 18A being angularly offset from the fibers in a vertically adjacent lamina 18B. The disc 12 is formed by layering the laminae in a symmetric manner and thereafter curing the same. "Symmetric" is meant to convey the idea that the orientation of the axes of the fibers in the laminae above a central lamina is mirrored in the orientation of the axes of the fibers in the laminae below that central laminae.

The hub or disc 12 is surrounded by a filament wound, high strength fiber-reinforced composite rim 20. The rim 20 may in practice be formed from a nested array of a plurality of rings of which two such rings, 20A, 20B, are shown. The rings 20A, 20B, etc., are interference fit together. The thickness of the rim 20 is exaggerated in the Figures for clarity of illustration. The rim 20 has a conforming polygonal configuration on its inner perimeter. As will be developed, the rim 20, in a manner to be described, assists in generating a radially inwardly directed force which prevents the individual fluid sample containers, such as the containers 22, disposed within the cavities 14 from punching their way through the edge of the disc 12. It should be understood that the rim 14 may also be wound as an integral member or may be provided by any other convenient fabrication method and remain within the contemplation of this invention.

A drive fitting 30 (in this case fabricated of titanium) is suitably connected to the underside of the disc 12. The fitting 30 is provided with a recess 32 which is adapted to receive a drive spud whereby the rotor may be connected to a source M of motive energy.

Although any suitable composite fiber materials may be utilized, it is preferred that the laminae which form the disc use aramid fibers such as that sold by E. I. du Pont de Nemours and Company under the trademark "Kevlar." Similarly, fiber reinforcement for the rim may be formed of any composite material although either a carbon-epoxy or aramid-epoxy fiber material is preferred.

Both the disc 12 and the rim 14 have a predetermined set of physical properties associated therewith which serves to determine the magnitude to which each of those bodies would deflect radially outwardly due to various applied forces. These properties may be collectively termed the "stiffness" of the disc or rim, as the case may be. Those skilled in the art may readily appreciate the various properties which contribute to the stiffness of the hub and rim, e.g., modulus of elasticity, density, cross section area, and radius, as well as the factors which apply force to these members, e.g., centrifugal force, body load, and preload. The stiffness of the disc 12 and the rim 14 are selected such that any radial growth of the rim should be less than and at most equal to that of the disc.

Since the disc 12 has a different stiffness than that of the rim 20 compressive stresses will be generated along the interface bond line between these elements at any rotating speed. This is desirable so that the bond line will not develop catastrophic fractures while in service. The compressive rim-disc stress is increased by providing both the rim 20 and the outer peripheral surface of the disc 12 with their slightly polygonal shapes. The rim 20 and the disc 12 would then be assembled with adhesive bond lines located only in the areas of the sample receiving cavities.

The operation of a rotor in accordance with the present invention may be understood from reference to Figures 3 and 5. In Figure 3 the cavities 14 are located at the points of the polygon of the disc. When the rotor is at speed the disc 12 and the rim 20 deflect radially outwardly, as shown by the arrows 12G, 20G, respectively. Due to the disparity in stiffnesses the deflection of the disc would, if uninhibited, grow faster than the rim 20. The combination of centrifugal force and the disparate stiffnesses in the disc and rim causes the rim 20 and the disc 12 to deflect into truly circular shape (shown in dashed lines in Figure 3). This results in an additional inward radial force 22 being applied to the disc 12 in the area of each cavity 14. As a result of the increased inwardly directed compressive force 22 the cavities 14 may be placed closer to the rotor periphery than would normally be the case. Thus for a given sized rotor an increase in relative centrifugal force (RCF) may be expected. Alternatively a given RCF may be achieved with a small diameter rotor.

In the embodiment of the invention shown in Figure 5, wherein the cavities 14 are disposed midway between the points of the polygon when the rotor is at speed, the relatively more massive portions of the disc 12 in the vicinity of the points of the polygonal generate increased growth forces 12G' which are imposed on the rim 20. In response the radially inwardly directed force 22' is generated within the rim 14 substantially midway between the points of the polygon, thus again compressing that portion of the disc 12 in which the cavities are disposed.

Those skilled in the art having the benefit of the teachings of the present invention may effect numerous modifications thereto. These modifications are, however, to be construed as lying within the scope of the present invention as defined by the appended claims.

## Claims

1. A centrifuge rotor (10) comprising:
a central disc (12) having a predetermined stiffness associated therewith, the disc having an array of sample receiving cavities (14) therein located adjacent the periphery of the disc; and
a reinforcing rim (20) disposed circumferentially about the periphery of the disc (12) the rim also having a predetermined stiffness associated therewith, the stiffness of said rim (20) exceeding the stiffness of said disc (12);
characterized in that both the periphery of the disc (12) and the inner diameter of the rim (20) each are polygonal in shape, and that the rim and the disc are adhesively bonded only adjacent to those regions of the disc wherein the sample receiving cavities (14) are disposed, the disparity in physical properties in the disc and the rim being such that rotation of the rotor generates a radially inwardly directed compressive force imposed by the rim on the disc in the vicinity of the cavities therein.

2. The rotor of Claim 1 wherein the disc (12) comprises a laminated structure comprising a plurality of isotropic fiber laminates (18A, 18B) with the axes of each fiber in each vertically adjacent laminate being offset by a predetermined angular amount from the axis of each fiber in the next adjacent laminate.

3. The rotor of Claim 1 or 2 wherein the sample receiving cavities (14) are disposed in the vicinity of the points of the polygonal disc (12).

4. The rotor of Claim 1 or 2 wherein the sample receiving cavities (14) are disposed between the points of the polygonal disc (12).

5. The rotor of one of Claims 1—4 further comprising a drive fitting (30) attached to the underside of the disc (12).

6. The rotor of one of Claims 1—5, wherein said rim (20) is formed from a nested array of a plurality of rings (20A, 20B).

**Patentansprüche**

1. Zentrifugenrotor (10) mit
—einer zentralen Scheibe (12), die eine vorbestimmte Steifigkeit aufweist, wobei die Scheibe eine Reihe dem Umfang der Scheibe benachbarter Probenaufnahmehohlräume (14) aufweist; und
—einem um den Umfangsrand der Scheibe (12) umlaufend angeordneten Verstärkungsrand (20), welcher ebenfalls eine vorbestimmte Steifigkeit aufweist, wobei die Steifigkeit des Randes (20) die Steifigkeit der Scheibe (12) übersteigt;
dadurch gekennzeichnet, daß sowohl der Umfang der Scheibe (12), als auch der Innendurchmesser des Randes (20) polygonale Form aufweisen, und daß der Rand und die Scheibe nur nahe den Bereichen der Scheibe miteinander verbonded sind, in denen die Probenaufnahmehohlräume (14) angeordnet sind, wobei die Verschiedenheit der physikalischen Eigenschaften der Scheibe und des Randes so ist, daß ein Rotieren des Rotors eine radial einwärts gerichtete Druckkraft erzeugt, die der Rand auf die Scheibe in der Nähe der darin angeordneten Hohlräume ausübt.

2. Rotor nach Anspruch 1, bei dem die Scheibe (12) eine Schichtstruktur umfaßt, welche mehrere isotrope Faserlaminate (18A, 18B) aufweist, wobei die Achsen jeder Faser in jedem vertikal benachbarten Laminat um einen vorbestimmten Winkelbetrag von der Achse jeder Faser im nächsten benachbarten Laminat abgesetzt sind.

3. Rotor nach Anspruch 1 oder 2, bei dem die Probenaufnahmehohlräume (14) in der Nähe der Spitzen der polygonalen Scheibe (12) angeordnet sind.

4. Rotor nach Anspruch 1 oder 2, bei dem die Probenaufnahmehohlräume (14) zwischen den Spitzen der polygonalen Scheibe (12) angeordnet sind.

5. Rotor nach einem der Ansprüche 1—4, ferner mit einem an der Unterseite der Scheibe (12) befestigten Antriebs-Anschlußstück (30).

6. Rotor nach einem der Ansprüche 1—5, bei dem der Rand (20) aus einer ineinander verschachtelten Gruppe mehrere Ringe (20A, 20B) gebildet ist.

**Revendications**

1. Rotor centrifugeur (109) comprenant:
un disque central (12) ayant une rigidité prédéterminée qui lui est associée, le disque ayant un agencement de cavités (14) de réception d'échantillons situées au voisinage de la périphérie du disque; et
une couronne (20) de renforcement disposée circonférentiellement autour de la périphérie du disque (12), cette couronne ayant également une rigidité prédéterminée qui lui est associée, la rigidité de ladite couronne (20) excédant celle du disque (12);
caractérisé en ce que la périphérie du disque (12) et le diamètre interne de la couronne (20) ont chacun une forme polygonale, et en ce que la couronne et le disque sont liés par collage seulement au voisinage des parties du disque dans lesquelles sont situées les cavités (14) de réception d'échantillons, la disparité dans les propriétés physiques du disque et de la couronne étant telles que la rotation du rotor engendre une force de compression dirigée radialement vers l'intérieur imposée par la couronne sur le disque au voisinage des cavités prévues dans celui-ci.

2. Rotor suivant la revendication 1, dans lequel le disque (12) est constitué d'une structure lamifiée comprenant plusieurs couches fibreuses isotropiques (18A, 18B), les axes de chaque fibre dans chaque couche verticalement adjacente étant décalés d'un angle prédéterminé par rapport à l'axe de chaque fibre dans la couche adjacente suivante.

3. Rotor suivant la revendication 1 ou 2 dans lequel les cavités (14) recevant les échantillons sont disposées au voisinage des sommets du disque polygonal (12).

4. Rotor suivant la revendication 1 ou 2, dans lequel les cavités (14) recevant les échantillons sont disposées entre les sommets du disque polygonal (12).

5. Rotor suivant l'une quelconque des revendications 1 à 4, comprenant en outre un raccord d'entraînement (30) fixé à la face inférieure du disque (12).

6. Rotor suivant l'une quelconque des revendications 1 à 5, dans lequel ladite couronne (20) est formée à partir d'un agencement de plusieurs couronnes (20A, 20B) encastrées.

*Fig. 1*

*Fig. 2*

Fig. 3

Fig. 4

12

10

14

22

22

14

14

14

22

22

VCL

22

14

14

22

18A

18B

22

14

14

22

20A

20

20B

Fig. 5

12G'

22'

20

22'

14

14

12G'

12G'

12G'

12